# EUROPEAN PATENT APPLICATION

(11) **EP 3 247 129 A1**
(43) Date of publication of application: **22.11.2017**
(21) Application number: 17169679.2
(22) Date of filing: 05.05.2017
(51) Int. Cl.: H04Q 11/00

(54) **OPTICAL COMMUNICATION DEVICE AND OPTICAL COMMUNICATION METHOD**

(30) Priority: 18.05.2016 JP 2016099315
(71) Applicant: Fujitsu Limited, Kawasaki-shi, Kanagawa 211-8588 (JP)
(72) Inventor: SASAKI, Yu, Kanagawa, 211-8588 (JP)
(74) Representative: Hoffmann Eitle

(57) **Abstract**

There is provided an optical communication device as a first optical communication device coupled to a second optical communication device through a plurality of logic links, the optical communication device including a generator configured to generate a first control frame into which each piece of information for indicating an amount of each data to be transmitted to the second optical communication device is allocated in an order corresponding to each identification information of the plurality of logic links, and a transmitter configured to transmit the first control frame generated by the generator to the second optical communication device by using the plurality of logic links.

## Description

### FIELD

The embodiments discussed herein are related to an optical communication device and an optical communication method.

### BACKGROUND

As one of optical communication systems of fiber to the home (FTTH) in the related art, a passive optical network (PON) system has been known (see, e.g., Japanese Laid-Open Patent Publication Nos. 2014-121042 and 2013-187807). An optical communication device at a station side in the PON system is called, for example, an optical line terminal (OLT). Further, the optical communication device at a user side in the PON system is called, for example, an optical network unit (ONU).

Related techniques are disclosed in, for example, Japanese Laid-Open Patent Publication No. 2014-121042 and Japanese Laid-Open Patent Publication No. 2013-187807.

### SUMMARY

According, it is an object in one aspect of the invention to provide an optical communication device and an optical communication method which may promote effective utilization of a band.

According to an aspect of the invention, an optical communication device as a first optical communication device coupled to a second optical communication device through a plurality of logic links, the optical communication device includes a generator configured to generate a first control frame into which each piece of information for indicating an amount of each data to be transmitted to the second optical communication device is allocated in an order corresponding to each identification information of the plurality of logic links, and a transmitter configured to transmit the first control frame generated by the generator to the second optical communication device by using the plurality of logic links.

### BRIEF DESCRIPTION OF DRAWINGS

FIG. 1 is a diagram illustrating one example of a PON system according to an embodiment;
FIG. 2 is a diagram illustrating one example of a logic link between an ONU and an OLT in a PON system according to the embodiment;
FIG. 3 is a sequence diagram illustrating one example of processing data transmission of UL in the PON system according to the embodiment;
FIG. 4 is a diagram illustrating one example of an MPCP frame transmitted to the ONU by the OLT according to the embodiment;
FIG. 5 is a diagram illustrating one example of the MPCP frame transmitted to the OLT by the ONU according to the embodiment;
FIG. 6 is a diagram illustrating one example of the ONU according to the embodiment;
FIG. 7 is a diagram illustrating one example of a hardware configuration of the ONU according to the embodiment;
FIG. 8 is a diagram illustrating one example of the OLT according to the embodiment;
FIG. 9 is a diagram illustrating one example of the hardware configuration of the OLT according to the embodiment;
FIG. 10 is a flowchart illustrating one example of processing by the ONU according to the embodiment;
FIG. 11 is a flowchart illustrating one example of the processing by the OLT according to the embodiment; and
FIG. 12 is a diagram illustrating one example of a transmission/reception timing of a signal in the PON system according to the embodiment.

### DESCRIPTION OF EMBODIMENTS

For example, when a plurality of logic links is set between the ONU and the OLT, a control frame is transmitted/received for each logic link. Thus, the number of bands which may be used for traffic such as user data decreases. As a result, the band which may be used for optical communication may not be effectively used.

Hereinafter, embodiments of a technology which may promote available utilization of the band will be described in detail with reference to drawings.

### [PON System]

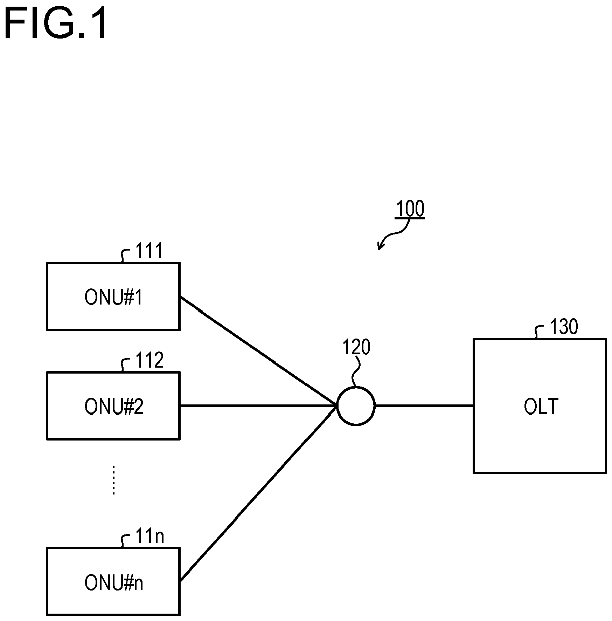

FIG. 1 is a diagram illustrating one example of a PON system according to an embodiment. As illustrated in FIG. 1, the PON system 100 according to the embodiment includes n ONUs 111 to 11n (#1 to #n), a splitter 120, and an OLT 130. n is, for example, a natural number of 1 or more. The ONUs 111 to 11n are connected with the OLT 130 through the splitter 120. Each of the ONUs 111 to 11n is an optical communication device (in-house device) at a user side, which may perform optical communication with the OLT 130 through the splitter 120. The OLT 130 is the optical communication device (*e.g*., a station-side device) at a station side, which may perform the optical communication with each of the ONUs 111 to 11n through the splitter 120.

### [Logic Link between ONU and OLT in PON System]

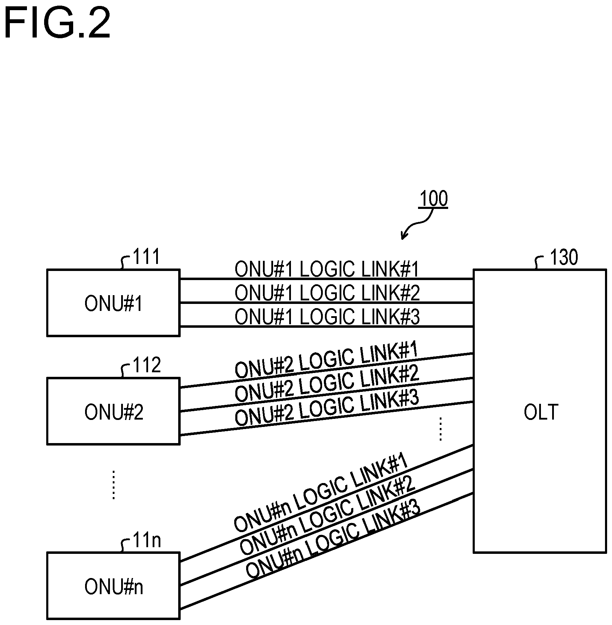

FIG. 2 is a diagram illustrating one example of a logic link between an ONU and an OLT in the PON system according to the embodiment. In FIG. 2, the same parts as illustrated in FIG. 1 are denoted by the same reference numerals, and descriptions thereof will be omitted. A plurality of logic links is formed between each of the ONUs 111 to 11n and the OLT 130. In the example illustrated in FIG. 2, three logic links #1 to #3 are formed between each of the ONUs 111 to 11n and the OLT 130. The plurality of logic links is formed for each ONU to flexibly operate a service.

Downlink (DL) data transmission from the OLT 130 to the ONU 111 will be described. When the logic link is set between the OLT 130 and the ONU 111, the OLT 130 grants a logic link ID to the set logic link. The ONU 111 extracts and receives only data including the logic link ID granted to the logic link between the OLT 130 and its own ONU by the OLT 130 among DL data to each ONU transmitted from the OLT 130. The DL data transmission from the OLT 130 to the ONU 111 has been described, but DL data transmission from the OLT 130 to the ONU 112 to 11n is also similarly described.

Uplink (UL) data transmission from the ONU 111 to the OLT 130 will be described. The UL data transmission is performed by a band indicated by the OLT 130 by using a control frame transmitted/received between the ONU 111 and the OLT 130. For the UL data transmission, the control frame transmitted/received between the ONU 111 and the OLT 130 is, for example, a multi-point control protocol (MPCP) frame.

The band indicated to the ONU 111 by the OLT 130 is a time resource allocated to the ONU 111 by the OLT 130. For example, the band is indicated by a combination of a transmission start time at which the ONU 111 starts the UL data transmission and a transmission time (time length) at which the ONU 111 performs the UL data transmission. However, the band is not limited to the combination of the transmissions start time and the transmission time, and for example, may be indicated as a combination of the transmission start time and a transmission end time or a combination of the transmission start time and a transmission data amount.

The UL data transmission from the ONU 111 to the OLT 130 has been described, but the UL data transmission from the ONU 112 to 11n to the OLT 130 is also similarly described.

The ONU 111 and the OLT 130 transmit/receive the MPCP frames for mutual logic links #1 to #3 by using a representative logic link (hereinafter, referred to as a "representative link") among the mutual logic links #1 to #3. As one example, a case in which logic link #1 among logic links #1 to #3 between the ONU 111 and the OLT 130 is the representative link will be described.

For example, the ONU 111 notifies the OLT 130 of the amount (accumulation amount) of UL data for logic links #1 to #3 between the ONU 111 and the OLT 130, by using a UL MPCP frame (REPORT frame) of logic link #1 (representative link) between the ONU 111 and the OLT 130. As a result, in logic links #2 and #3 between the ONU 111 and the OLT 130, the band used for transmitting the UL MPCP frame in the related art may be used for transmitting UL control information other than UL user data or MPCP frame.

Further, the ONU 111 transmits to the OLT 130 the MPCP frame of logic link #1 storing each piece of information indicating each UL data amount of logic links #1 to #3 in an order corresponding to identification information of each of logic links #1 to #3. For example, in the PON system 100, it is assumed that logic links #1, #2, and #3 correspond to the first, the second, and the third of the order, respectively. In this case, the ONU 111 transmits to the OLT 130 the MPCP frames storing the information indicating the UL data amount of logic link #1, the information indicating the UL data amount of logic link #2, and the information indicating the UL data amount of logic link #3 in order.

The OLT 130 indicates to the ONU 111 each band allocated to the UL data transmission for logic links #1 to #3 between the OLT 130 and the ONU 111 by using a DL MPCP frame (GATE frame) of logic link #1 (representative link) between the OLT 130 and the ONU 111. As a result, in logic links #2 and #3 between the ONU 111 and the OLT 130, in the related art, the band used for transmitting the DL MPCP frame may be used for transmitting DL control information other than DL user data or MPCP frame.

The OLT 130 transmits to the ONU 111 the MPCP frame of logic link #1 storing each piece of information indicating the band allocated to the UL data transmission from the ONU 111 by logic links #1 to #3 in an order corresponding to identification information of each of logic links #1 to #3. For example, in the PON system 100, it is assumed that MPCP frames #1, #2, and #3 correspond to logic links #1, #2, and #3, respectively. In this case, the OLT 130 transmits to the ONU 111 the MPCP frames storing the information indicating the band allocated for logic link #1, the information indicating the band allocated for logic link #2, and the information indicating the band allocated for logic link #3 in order.

The transmission/reception of the MPCP frames between the ONU 111 and the OLT 130 has been described, but transmission/reception of the MPCP frames between the ONUs 112 to 11n and the OLT 130 may also be similarly described.

One example of a transmission/reception flow of the MPCP frames between the ONUs 111 to 11n and the OLT 130 will be described. For example, each of the ONUs 111 to 11n notifies to the OLT 130 each UL data mount accumulated in a buffer for each logic link by the MPCP frame of the representative link at the time of transmitting the MPCP frame to the OLT 130.

The OLT 130 calculates the band allocated to the UL data transmission in each logic link of the ONUs 111 to 11n based on the MPCP frame received from each representative link of the ONU 111 to 11n. In addition, the OLT 130 notifies to the ONU 111, for example, each band allocated to the UL data transmission in each logic link of the ONU 111 by the MPCP frame of the representative link of the ONU 111. Similarly, the OLT 130 notifies to the ONUs 112 to 11n each band allocated to the UL data transmission in each logic link of the ONUs 112 to 11n by the MPCP frame of the representative link of the ONUs 112 to 11n.

As a result, the number of logic links required for band control of the UL user data from the ONUs 111 to 11n to the OLT 130 may be reduced. Therefore, for example, the number of bands used for transmitting control information other than the user data or the MPCP frame is increased to promote the available utilization of the band. For example, the band used for transmitting the user data is increased to suppress latency of the user data.

For example, as the representative link of the ONU 111, a logic link having the lowest latency among logic links #1 to #3 of the ONU 111 may be used. The logic link having low latency is, for example, a logic link having a short band allocation period. The latency of the logic link is set depending on, for example, a communication service of the logic link. As one example, the latency of the logic link of a communication service not requiring the low latency such as web-browsing or an e-mail is set to be high. Meanwhile, the latency of the logic link of a communication service requiring the low latency, such as call or a match-up game is set to be low.

For example, the OLT 130 sets a logic link having the lowest latency among logic links #1 to #3 as the representative link according to each communication service of logic links #1 to #3 and notifies a setting result to the ONU 111. Alternatively, the representative link may be set by the ONU 111. In this case, the ONU 111 notifies the setting result of the representative link to the OLT 130. The setting method of the representative link of the ONU 111 has been described, but setting methods of the representative link of the ONUs 112 to 11n are also similarly described.

The logic link having the lowest latency among the plurality of logic links is set as the representative link to prevent, for example, the latency of the logic link requiring the small latency from being increased by transmitting with bringing the control information of each logic link together by the representative link.

In FIG. 2, the configuration in which each of the ONUs 111 to 11n forms 3 logic links #1 to #3 has been described, but the number of logic links formed by the ONUs 111 to 11n may be set to a predetermined number of 2 or more. Further, some ONUs among the ONUs 111 to 11n may be ONUs having one formed logic link.

### [Processing in PON System]

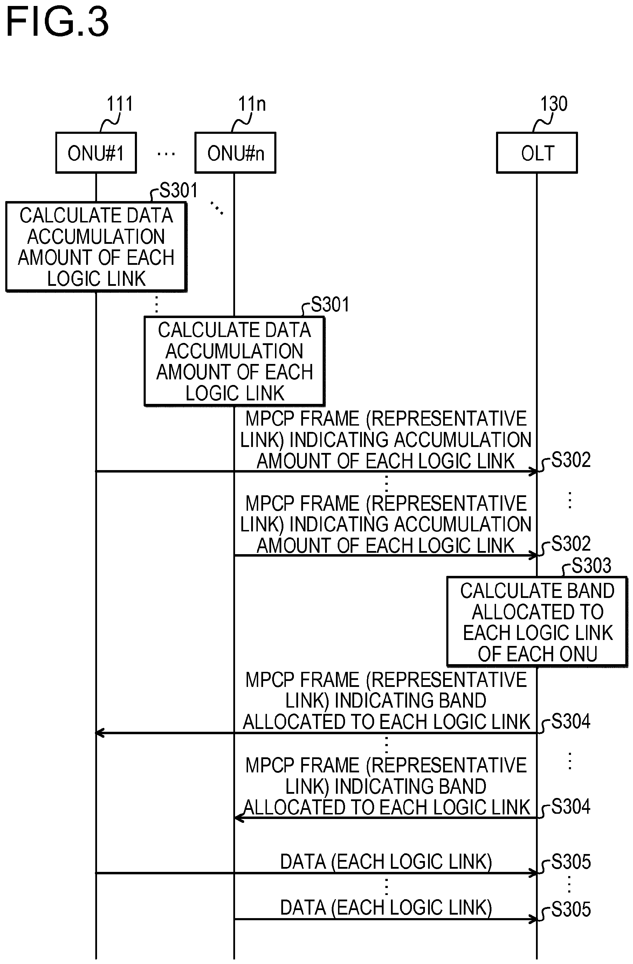

FIG. 3 is a sequence diagram illustrating one example of processing data transmission of UL in the PON system according to the embodiment. In the PON system 100 according to the embodiment, as the processing of the UL data transmission, for example, each operation illustrated in FIG. 3 is repeatedly executed.

First, each of the ONUs 111 to 11n calculates the amount (accumulation amount) of the UL data of each logic link, which is accumulated in the buffer of its own ONU (operation S301). Subsequently, each of the ONUs 111 to 11n transmits to the OLT 130 the MPCP frame indicating the accumulation amount of each logic link, which is calculated by operation S301 by the representative link of its own ONU (operation S302).

Subsequently, the OLT 130 calculates the band allocated to each logic link of each of the ONUs 111 to 11n (each ONU) based on the MPCP frame from the ONUs 111 to 11n transmitted by operation S302 (operation S303). The band calculated by operation S303 is, for example, the transmission start time and the transmission time (time length) in the logic link.

Subsequently, the OLT 130 transmits to the ONUs 111 to 11n the MPCP frame indicating each band calculated by operation S303 by the representative link of the ONUs 111 to 11n (operation S304). In operation S304, the OLT 130 transmits, for example, the MPCP frame indicating the band allocated to each logic link of the ONU 111 to the ONU 111 by the representative link of the ONU 111. Similarly, the OLT 130 transmits to the ONUs 112 to 11n the MPCP frame indicating the band allocated to each logic link of the ONUs 112 to 11n by the representative link of the ONUs 112 to 11n.

Subsequently, each of the ONUs 111 to 11n reads the UL data of each logic link from the buffer of its own ONU and transmits the read UL data to the OLT 130 by the band indicated by the MPCP frame transmitted by operation S304 (operation S305). For example, the ONU 111 transmits the UL data only for the transmission time indicated by the MPCP frame from the transmission start time indicated by the MPCP frame transmitted by operation S304 with respect to each logic link of its own ONU. Similarly, the ONUs 112 to 11n transmit the UL data only for the transmission time indicated by the MPCP frame from the transmission start time indicated by the MPCP frame transmitted by operation S304 with respect to each logic link of its own ONU.

### [MPCP Frame Transmitted to ONU by OLT]

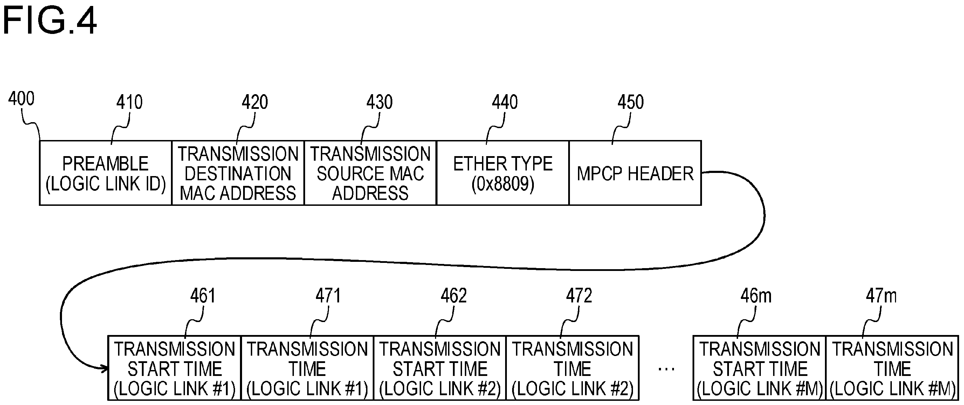

FIG. 4 is a diagram illustrating one example of the MPCP frame transmitted to the ONU by the OLT according to the embodiment. The OLT 130 according to the embodiment transmits, for example, an MPCP frame 400 illustrated in FIG. 4 to the ONUs 111 to 11n, for example, in operation S304 illustrated in FIG. 3. In the example illustrated in FIG. 4, it is assumed that each of the ONUs 111 to 11n sets m logic links between each of the ONUs 111 to 11n and the OLT 130.

The MPCP frame 400 includes a preamble 410, a transmission destination MAC address 420, a transmission source MAC address 430, an ether type 440, an MPCP header 450, transmission start points of time 461 to 46m, and transmission time 471 to 47m. MAC is an abbreviation of media access control.

The preamble 410 is a leading preamble of the MPCP frame 400. For example, the preamble 410 may be set as an ID of a logic link to transmit the MPCP frame 400. In this case, in the PON system 100, since the MPCP frame 400 is transmitted to the representative link of each ONU, the preamble 410 becomes the ID of the representative link of the ONU of a transmission destination of the MPCP frame 400.

The transmission destination MAC address 420 is the MAC address of the transmission destination of the MPCP frame 400 among the ONUs 111 to 11n. The transmission source MAC address 430 is the MAC address of the OLT 130 which is a transmission source of the MPCP frame 400. The ether type 440 is information indicating a frame type of the MPCP frame 400. For example, the ether type 440 may be set as "0x8809" indicating the MPCP frame. The MPCP header 450 is a header of an MPCP message.

The transmission start points of time 461 to 46m represent UL data transmission start points of times in respective logic links #1 to #m of the ONU in the transmission destination of the MPCP frame 400. The transmission time 471 to 47m represents a UL data transmission time (time length) in the respective logic links #1 to #m of the ONU in the transmission destination of the MPCP frame 400. The OLT 130 stores, for example, a calculation result of the band in operation S303 illustrated in FIG. 3 in the transmission start points of time 461 to 46m.

For example, the ONU 111 stores corresponding information of a storage order of identification information (*e.g*., logic link IDs) of logic links #1 to #m, the transmission start points of time, and the transmission time. In the corresponding information, for example, it is assumed that logic link #1, logic link #2, ..., logic link #m correspond to storage orders of first, second, ..., m-th, respectively. The corresponding information may be set in the ONU 111 and the OLT 130 in advance as common corresponding information in the PON system 100 and when logic links #1 to #m between the ONU 111 and the OLT 130 are set, logic links #1 to #m may be set in the ONU 111 and the OLT 130.

As a result, the ONU 111 may determine the transmission start points of time 461 to 46m and the transmission time 471 to 47m as the transmission start points of time and the transmission time for logic links #1 to #m, respectively based on the respective storage orders. For example, the ONU 111 may determine a first transmission start time 461 as the transmission start time for logic link #1 and a second transmission start time 462 as the transmission start time for logic link #2. Further, the ONU 111 may determine a first transmission time 471 as the transmission time for logic link #1 and a second transmission time 472 as the transmission time for logic link #2.

The ONU 111 transmits the UL data of logic link #1 of its own ONU only for a time length indicated by the transmission time 471 from a time indicated by the transmission start time 461. Similarly, the ONU 111 transmits the UL data of logic links #2 to #m of its own ONU only for time lengths indicated by the transmission time 472 to 47m, respectively from points of time indicated by the transmission start points of time 462 to 46m, respectively based on the MPCP frame 400 received from the OLT 130.

The UL data transmission based on the MPCP frame 400 by the ONU 111 has been described, but the UL data transmission based on the MPCP frame 400 by the ONUs 112 to 11n is also similarly described.

The MPCP frame 400 may additionally include information indicating timing when the ONU of the transmission destination of the MPCP frame 400 transmits the MPCP frame to the OLT 130.

### [MPCP Frame Transmitted to OLT by ONU]

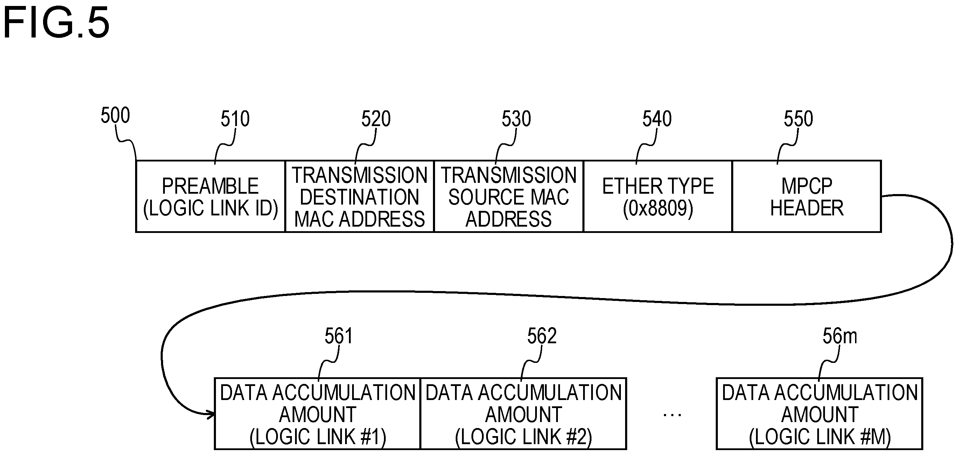

FIG. 5 is a diagram illustrating one example of the MPCP frame transmitted to the OLT by the ONU according to the embodiment. Each of the ONUs 111 to 11n according to the embodiment transmits, for example, an MPCP frame 500 illustrated in FIG. 5 to the OLT 130, for example, in operation S302 illustrated in FIG. 3. In the example illustrated in FIG. 5, it is assumed that each of the ONUs 111 to 11n sets m logic links between each of the ONUs 111 to 11n and the OLT 130.

The MPCP frame 500 is a control frame storing each piece of information indicating the amount (data accumulation amount) of respective UL data transmitted by m logic links in orders corresponding to respective identification information of m logic links. For example, the MPCP frame 500 includes a preamble 510, a transmission destination MAC address 520, a transmission source MAC address 530, an ether type 540, an MPCP header 550, and data accumulation amounts 561 to 56m.

The preamble 510 is a leading preamble of the MPCP frame 500. For example, the preamble 510 may be set as the ID of the logic link to transmit the MPCP frame 500. In this case, in the PON system 100, since the MPCP frame 500 is transmitted to the representative link of each ONU, the preamble 510 becomes the ID of the representative link of the ONU of the transmission source of the MPCP frame 500.

The transmission destination MAC address 520 is the MAC address of the OLT 130 which is the transmission destination of the MPCP frame 500. The transmission source MAC address 530 is the MAC address of the transmission source of the MPCP frame 500 among the ONUs 111 to 11n. The ether type 540 is information indicating the frame type of the MPCP frame 500. For example, the ether type 540 may be set as "0x8809" indicating the MPCP frame. The MPCP header 550 is the header of the MPCP message.

The data accumulation amounts 561 to 56m represent UL data accumulation amounts of logic links #1 to #m, respectively in the buffer of the ONU of the transmission source of the MPCP frame 500. Each of the ONUs 111 to 11n stores, for example, the calculation result of operation S301 illustrated in FIG. 3 in the data accumulation amounts 561 to 56m.

The OLT 130 calculates the band allocated to each logic link of the ONUs 111 to 11n based on the data accumulation amounts 561 to 56m of the MPCP frame 500, which are received from the respective ONUs 111 to 11n, for example, in operation S303 illustrated in FIG. 3.

For example, the OLT 130 stores corresponding information of the storage order of the identification information (*e.g*., logic link IDs) of logic links #1 to #m and the data accumulation amounts. In the corresponding information, for example, it is assumed that logic link #1, logic link #2, ..., logic link #m correspond to storage orders of first, second, ..., m-th, respectively. The corresponding information may be set in the ONUs 111 to 11n and the OLT 130 in advance as the common corresponding information in the PON system 100 and when logic links #1 to #m are set, the corresponding information may be set in the ONUs 111 to 11n and the OLT 130.

As a result, the OLT 130 may determine that the data accumulation amounts 561 to 56m are the data accumulation amounts for respective logic links #1 to #m based on the respective storage orders. For example, the OLT 130 may determine that a first data accumulation amount 561 is the data accumulation amount for logic link #1 and a second data accumulation amount 562 is the data accumulation amount for logic link #2.

### [ONU]

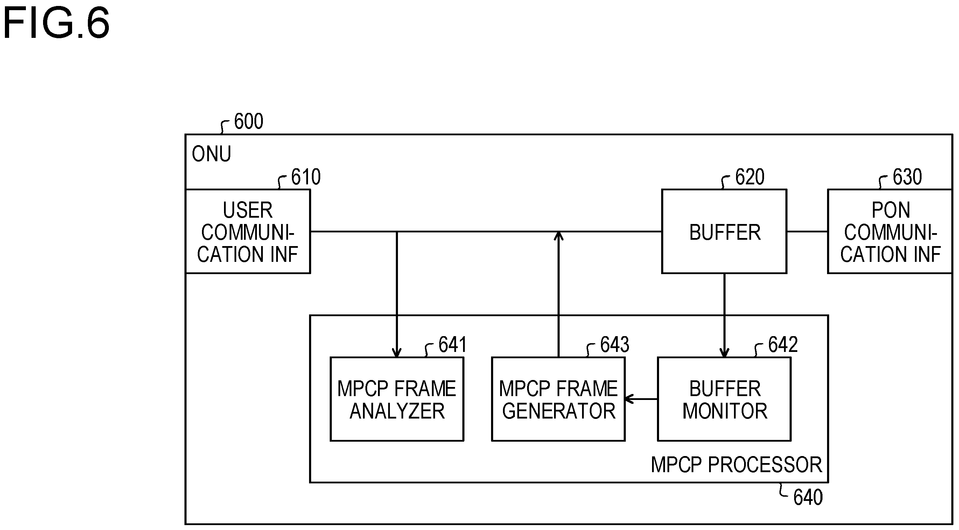

FIG. 6 is a diagram illustrating one example of the ONU according to the embodiment. Each of the ONUs 111 to 11n according to the embodiment may be implemented by, for example, the ONU 600 illustrated in FIG. 6. The ONU 600 includes a user communication interface 610, a buffer 620, a PON communication interface 630, and an MPCP processor 640.

The user communication interface 610 performs communication with a communication device at a user side, such as a personal computer (PC) or a voice over Internet protocol (VoIP) phone. For example, the user communication interface 610 stores the UL data from the user side, which is received in the buffer 620. Further, the user communication interface 610 reads data in the communication device at the user side among the DL data stored in the buffer 620 and transmits the read data to the communication device at the user side.

The PON communication interface 630 performs optical communication with the OLT 130 through the splitter 120. For example, the PON communication interface 630 converts the UL data read from the buffer 620 into an optical signal and transmits the converted optical signal to the OLT 130 through the splitter 120. Further, the PON communication interface 630 receives the optical signal transmitted from the OLT 130 through the splitter 120 to acquire the DL data. In addition, the PON communication interface 630 stores the acquired DL data in the buffer 620.

The MPCP processor 640 includes an MPCP frame analyzer 641, a buffer monitoring unit 624, and an MPCP frame generator 643. The MPCP frame analyzer 641 reads a DL MPCP frame in the ONU 600 among the DL data stored in the buffer 620 and analyzes the read MPCP frame.

For example, the MPCP frame analyzer 641 specifies the transmission start time and the transmission time of the UL data with respect to the respective logic links between the ONU 600 and the OLT 130 based on the read MPCP frame. The UL data of each logic link stored in the buffer 620 is read from the buffer 620 by the transmission start time and the transmission time specified by the MPCP frame analyzer 641 and transmitted from the PON communication interface 630 to the OLT 130. Further, the MPCP frame analyzer 641 may specify a transmission timing of the MPCP frame from the ONU 600 to the OLT 130 based on the read MPCP frame.

The buffer monitor 642 monitors the amount (accumulation amount) of the UL data stored in the buffer 620 with respect to the respective logic links between the ONU 600 and the OLT 130. In addition, the buffer monitor 642 notifies the UL data accumulation amount for each logic link, which is acquired by the monitoring, to the MPCP frame generator 643.

The MPCP frame generator 643 is an MPCP frame indicating the UL data accumulation amount for each logic link, which is notified from the buffer monitor 642 and generates the UL MPCP frame of the representative link among the logic links between the ONU 600 and the OLT 130. In addition, the MPCP frame generator 643 transmits the generated UL MPCP frame by the representative link among the logic links between the ONU 600 and the OLT 130.

For example, the UL MPCP frame generated by the MPCP frame generator 643 is stored in the buffer 620. In addition, the UL MPCP frame stored in the buffer 620 is read from the buffer 620 and transmitted from the PON communication interface 630 to the OLT 130 at the transmission timing of the MPCP frame in the OLT 130, which is specified by the MPCP frame analyzer 641.

In the ONU 600, a generating unit for generating the control frame storing each piece of information indicating the data accumulation amount of each logic link in the order corresponding to the identification information of each logic link may be implemented by, for example, the buffer monitor 642 and the MPCP frame generator 643. Further, a transmitting unit for transmitting the control frame generated by the generating unit to the OLT 130 may be implemented by, for example, the PON communication interface 630. Further, a receiving unit for receiving the control frame storing each piece of information indicating each band allocated to each UL data transmission by each logic link in the order corresponding to the identification information of each logic link from the OLT 130 may be implemented by, for example, the PON communication interface 630.

### [Hardware Configuration of ONU]

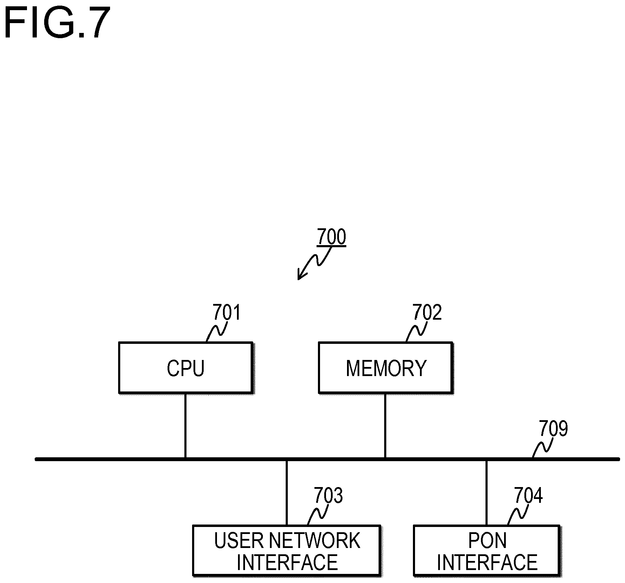

FIG. 7 is a diagram illustrating one example of a hardware configuration of the ONU according to the embodiment. The ONU 600 illustrated in FIG. 6 may be implemented by, for example, an ONU 700 illustrated in FIG. 7. The ONU 700 includes a central processing unit (CPU) 701, a memory 702, a user network interface 703, and a PON interface 704. The CPU 701, the memory 702, the user network interface 703, and the PON interface 704 are connected to each other by a bus 709.

The CPU 701 takes charge of an overall control of the ONU 700. The memory 702 includes, for example, a main memory and a sub memory. The main memory is, for example, a random access memory (RAM). The main memory is used as a working area of the CPU 701. The sub memory is, for example, a non-volatile memory such as a magnetic disk, an optical flash memory, or the like. The sub memory stores various programs to operate the ONU 700. The programs stored in the sub memory are loaded to the main memory and executed by the CPU 701.

The user network interface 703 is a user network interface (UNI) which performs communication with the communication device at the user side, such as the PC or a VoIP phone. The user network interface 703 is controlled by the CPU 701. The PON interface 704 is a communication interface which performs the communication with the OLT 130 by the optical signal. The PON interface 704 is controlled by the CPU 701.

The user communication interface 610 illustrated in FIG. 6 may be implemented by, for example, the user network interface 703. The buffer 620 illustrated in FIG. 6 may be implemented by, for example, the memory 702. The PON communication interface 630 illustrated in FIG. 6 may be implemented by, for example, the PON interface 704. The MPCP processor 640 illustrated in FIG. 6 may be implemented by, for example, the CPU 701.

### [OLT]

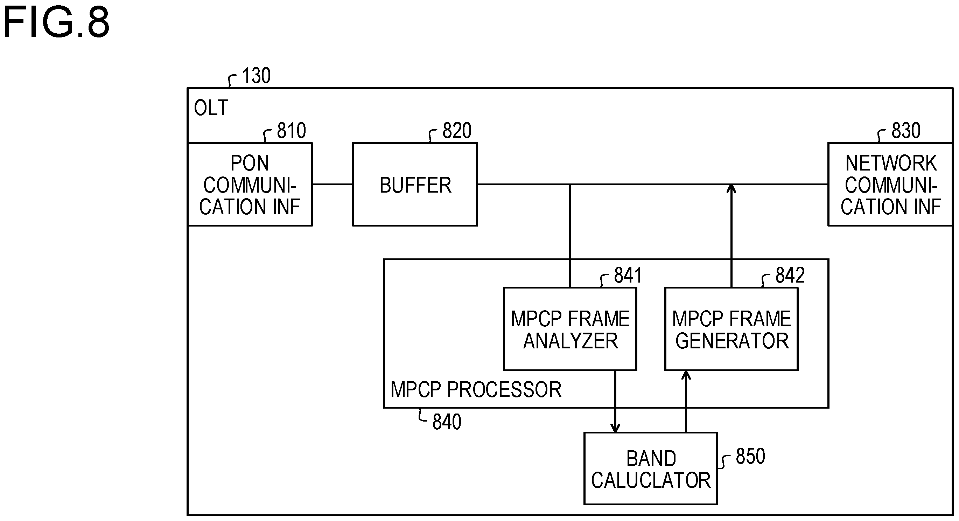

FIG. 8 is a diagram illustrating one example of the OLT according to the embodiment. The OLT 130 according to the embodiment includes, for example, a PON communication interface 810, a buffer 820, a network communication interface 830, an MPCP processor 840, and a band calculator 850 as illustrated in FIG. 8.

The PON communication interface 810 performs the optical communication with the ONUs 111 to 11n through the splitter 120. For example, the PON communication interface 810 converts the DL data read from the buffer 820 into the optical signal and transmits the converted optical signal to the ONUs 111 to 11n through the splitter 120. Further, the PON communication interface 810 receives the optical signal transmitted from the ONUs 111 to 11n through the splitter 120 to acquire the UL data. In addition, the PON communication interface 810 stores the acquired UL data in the buffer 820.

The network communication interface 830 performs the communication with a communication device of a wide-area network such as the Internet, or the like. For example, the network communication interface 830 stores the received DL data from the wide-area network in the buffer 820. Further, the network communication interface 830 reads the data in the communication device of the wide-area network among the DL data stored in the buffer 820 and transmits the read data to the communication device of the wide-area network.

The MPCP processor 840 includes an MPCP frame analyzer 841 and an MPCP frame generator 842. The MPCP frame analyzer 841 reads the MPCP frame in the OLT 130 among the UL data stored in the buffer 820 and analyzes the read MPCP frame.

For example, the MPCP frame analyzer 841 analyzes the UL data accumulation amount with respect to the respective logic links between the ONUs 111 to 11n and the OLT 130 based on the MPCP frame from the ONUs 111 to 11n. In addition, the MPCP frame analyzer 841 notifies an analysis result of the UL data accumulation amount to the band calculator 850.

The MPCP frame generator 842 is an MPCP frame indicating the band for each logic link notified from the band calculator 850 and generates the MPCP frame of the representative link of the ONU at the transmission destination of the MPCP frame. In addition, the MPCP frame generator 842 stores the generated MPCP frame in the buffer 820. The MPCP frame stored in the buffer 820 is read from the buffer 820 and transmitted from the PON communication interface 810 to the ONUs 111 to 11n at a predetermined DL transmission timing.

The band calculator 850 calculates the band (for example, the transmission start time and the transmission time) allocated to each logic link between the ONUs 111 to 11n and the OLT 130 based on the analysis result of the UL data accumulation amount notified from the MPCP frame analyzer 841. For example, the band calculator 850 calculates the band of each logic link so that the sum of the bands of the respective logic links is not more than a band usable in the UL in the OLT 130. In addition, the band calculator 850 notifies the calculated band for each logic link to the MPCP frame generator 842.

A receiving unit for receiving the control frame storing each piece of information indicating each UL data amount transmitted by each logic link in the order corresponding to the identification information of each logic link from the ONUs 111 to 11n may be implemented by, for example, the PON communication interface 810. Further, an allocating unit for allocating the band to each UL data transmission may be implemented by, for example, the MPCP frame analyzer 841 and the band calculator 850, based on the control frame received by the receiving unit. In addition, a generating unit for generating the control frame storing each piece of information indicating each band allocated to each data transmission by each logic link by the allocating unit in the order corresponding to the identification information of each logic link may be implemented by, for example, the MPCP frame generator 842. Further, the transmitting unit for transmitting the control frame generated by the generating unit to the ONUs 111 to 11n may be implemented by, for example, the PON communication interface 810.

### [Hardware Configuration of OLT]

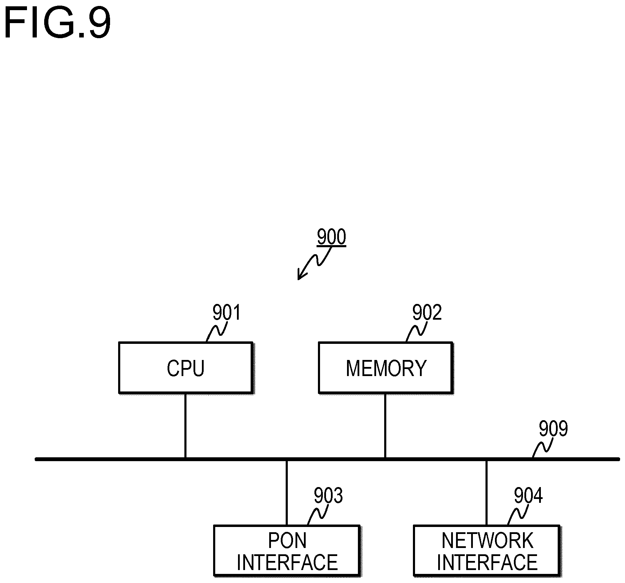

FIG. 9 is a diagram illustrating one example of the hardware configuration of the OLT according to the embodiment. The OLT 130 illustrated in FIG. 8 may be implemented by, for example, an OLT 900 illustrated in FIG. 9. The OLT 900 includes a CPU 901, a memory 902, a PON interface 903, and a network interface 904. The CPU 901, the memory 902, the PON interface 903, and the network interface 904 are connected to each other by a bus 909.

The CPU 901 takes charge of the overall control of the OLT 900. The memory 902 includes, for example, a main memory and a sub memory. The main memory is, for example, the RAM. The main memory is used as the working area of the CPU 901. The sub memory is, for example, the non-volatile memory such as the magnetic disk, the flash memory, or the like. The sub memory stores various programs to operate the OLT 900. The programs stored in the sub memory are loaded to the main memory and executed by the CPU 901.

The PON interface 903 is a communication interface which performs the communication with the ONUs 111 to 11n by the optical signal. The PON interface 903 is controlled by the CPU 901. The network interface 904 is a communication interface which performs the communication with the communication device of the wide-area network. The network interface 904 is controlled by the CPU 901.

The PON communication interface 810 illustrated in FIG. 8 may be implemented by, for example, the PON interface 903. The buffer 820 illustrated in FIG. 8 may be implemented by, for example, the memory 902. The network communication interface 830 illustrated in FIG. 8 may be implemented by, for example, the network interface 904. The MPCP processor 840 and the band calculator 850 illustrated in FIG. 8 may be implemented by, for example, the CPU 901.

### [Processing by ONU]

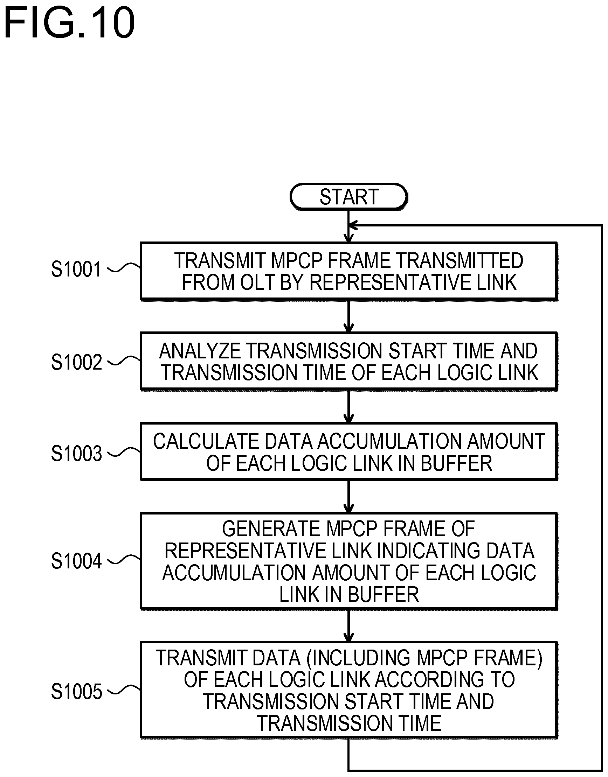

FIG. 10 is a flowchart illustrating one example of processing by the ONU according to the embodiment. The ONU 600 illustrated in FIG. 6 executes, for example, each operation illustrated in FIG. 10. First, the ONU 600 receives the MPCP frame transmitted from the OLT 130 by the representative link among the respective logic links between the ONU 600 and the OLT 130 (operation S1001). Operation S1001 is executed by, for example, the PON communication interface 630 illustrated in FIG. 6. The MPCP frame received by operation S1001 is transmitted to, for example, the MPCP frame analyzer 641 illustrated in FIG. 6.

Subsequently, the ONU 600 analyzes the transmission start time and the transmission time of each logic link indicated from the OLT 130 based on the MPCP frame received by operation S1001 (operation S1002). Operation S1002 is executed by, for example, the MPCP frame analyzer 641 illustrated in FIG. 6.

Subsequently, the ONU 600 calculates the UL data accumulation amount of each logic link in the buffer 620 (operation S1003). Operation S1003 is executed by, for example, the buffer monitoring unit 642 illustrated in FIG. 6. The accumulation amount of data calculated by operation S1003 is notified to, for example, the MPCP frame generator 643 illustrated in FIG. 6.

Subsequently, the ONU 600 is the MPCP frame indicating the UL data accumulation amount of each logic link, which is calculated by operation S1003 and generates the MPCP frame of the representative link among the logic links between the ONU 600 and the OLT 130 (operation S1004). Operation S1004 is executed by, for example, the MPCP frame generator 643 illustrated in FIG. 6. The MPCP frame generated by operation S1004 as the UL data is stored in, for example, the buffer 620 illustrated in FIG. 6.

Subsequently, the ONU 600 reads the UL data of each logic link in the buffer 620 (operation S1005) according to the transmission start time and the transmission time of each logic link analyzed by operation S1002, transmits the UL data of each logic link to the OLT 130 (operation S1005), and returns to operation S1001. Operation S1005 is executed by, for example, the PON communication interface 630 illustrated in FIG. 6. The UL data transmitted by operation S1005 includes the MPCP frame generated by operation S1004 in addition to, for example, the UL data (user data) from the user side received by the user communication interface 610.

### [Processing by OLT]

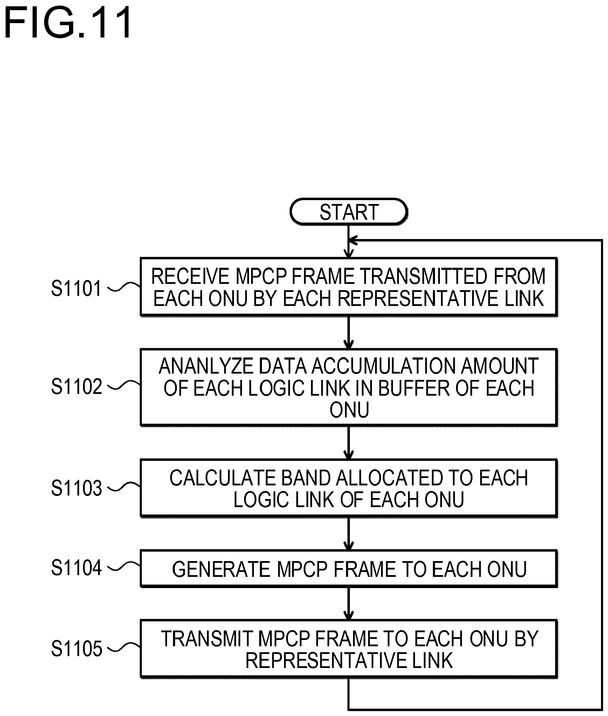

FIG. 11 is a flowchart illustrating one example of processing by the OLT according to the embodiment. The OLT 130 according to the embodiment executes, for example, each operation illustrated in FIG. 11. First, the OLT 130 receives the MPCP frame transmitted by each representative link of the ONUs 111 to 11n (each ONU) from the ONUs 111 to 11n (each ONU) (operation S1101). Operation S1001 is executed by, for example, the PON communication interface 810 illustrated in FIG. 8. The MPCP frame received by operation S1101 is transmitted to, for example, the MPCP frame analyzer 841 illustrated in FIG. 8.

Subsequently, the OLT 130 analyzes the UL data accumulation amount of each logic link in the buffer 620 of the ONUs 111 to 11n (each ONU) based on the MPCP frame received by operation S1101 (operation S1102). Operation S1102 is executed by, for example, the MPCP frame analyzer 841 illustrated in FIG. 8. The accumulation amount analyzed by operation S1102 is notified to, for example, the band calculator 850 illustrated in FIG. 8.

Subsequently, the OLT 130 calculates the band (for example, the start transmission start time and the transmission time) allocated to each logic link of the ONUs 111 to 11n (each ONU) based on the accumulation amount analyzed by operation S1102 (operation 1103). Operation S1103 is executed by, for example, the band calculator 850 illustrated in FIG. 8. The band calculated by operation S1103 is notified to, for example, the MPCP frame generator 842 illustrated in FIG. 8.

Subsequently, the OLT 130 is an MPCP frame in the ONUs 111 to 11n (each ONU) indicating the band calculated by operation S1103 and generates the MPCP frame of the representative link of the representative link of the ONUs 111 to 11n (each ONU) (operation S1104). Operation S1104 is executed by, for example, the MPCP frame generator 842 illustrated in FIG. 8. The MPCP frame generated by operation S1104 as the UL data is stored in, for example, the buffer 820 illustrated in FIG. 8.

Subsequently, the OLT 130 transmits to the ONUs 111 to 11n (each ONU) the MPCP frame generated by operation S1104 by the representative link of the ONUs 111 to 11n (each ONU) (operation S1105) and returns to operation S1101. Operation S1105 is executed by, for example, the PON communication interface 810 illustrated in FIG. 8.

In operation S1105, the OLT 130 transmits, for example, the MPCP frame indicating the band allocated to each logic link of the ONU 111 to the ONU 111 by the representative link of the ONU 111. Similarly, the OLT 130 transmits to the ONU 111 the MPCP frame indicating the band allocated to each logic link of each of the ONUs 112 to 11n by the representative link of each of the ONUs 112 to 11n.

The OLT 130 performs processing of receiving the UL data transmitted from the ONUs 111 to 11n by the band calculated by operation S1103.

### [Transmission/reception Timing of Signal in PON System]

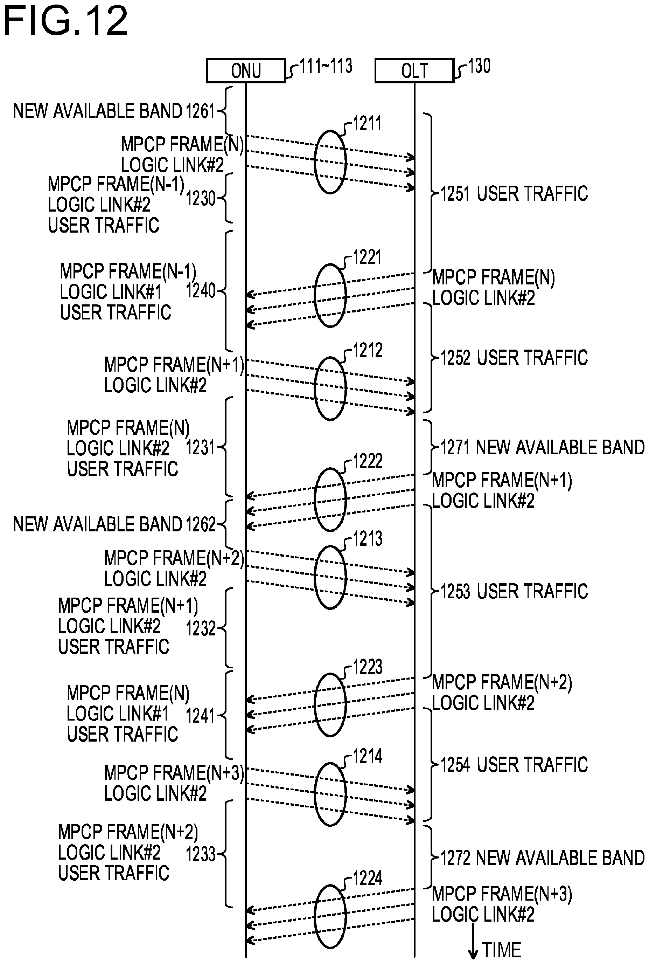

FIG. 12 is a diagram illustrating one example of a transmission/reception timing of a signal in the PON system according to the embodiment. In FIG. 12, a vertical direction represents a time. In FIG. 12, the transmission/reception timing of the signal between the ONUs 111 to 113 and the OLT 130 is described. Further, in the example illustrated in FIG. 12, it is assumed that in each of the ONUs 111 to 113, logic links #1 and #2 are set between each of the ONUs 111 to 113 and the OLT 130 and logic link #2 between logic links #1 and #2 is set as the representative link.

MPCP frames 1211 to 1214 illustrated in FIG. 12 are MPCP frames transmitted to the OLT 130 from the ONUs 111 113 N^{th} to N+3^{rd} times, respectively. Further, each of the MPCP frames 1211 to 1214 is the MPCP frame indicating the UL data accumulation amount in the buffer 620 of the ONUs 111 to 113. The MPCP frames 1211 to 1214 are transmitted by logic link #2 (representative link) of the ONUs 111 to 113, respectively.

The MPCP frames 1221 to 1224 are respective MPCP frames transmitted from the OLT 130 to the ONUs 111 to 113 based on the MPCP frames 1211 to 1214, respectively. For example, the MPCP frame 1221 is an MPCP frame indicating each band calculated by the OLT 130 based on the MPCP frame 1211. Similarly, the MPCP frames 1222 to 1224 are MPCP frames indicating each band calculated by the OLT 130 based on the MPCP frames 1211 to 1214.

User traffic transmission periods 1230 to 1233 are transmission time of user traffic of logic link #2 from N-1^{st} to N+2^{nd} ONUs 111 to the OLT 130, respectively. For example, in the user traffic transmission period 1230, the ONUs 111 to 113 transmit the user traffic of logic link #2 to the OLT 130 by the band indicated by the MPCP frame transmitted from the OLT 130 before the MPCP frame 1221 (N^{th} time). Similarly, in the user traffic transmission periods 1231 to 1233, the ONUs 111 to 113 transmit the user traffic of logic link #2 to the OLT 130 by the band indicated by the MPCP frames 1221 to 1223, respectively.

User traffic transmission periods 1240 and 1241 are transmission periods of the user traffic of logic link #1 from the N-1^{st} and N^{th} ONUs 111 to the OLT 130, respectively. For example, in the user traffic transmission period 1240, the ONUs 111 to 113 transmit the user traffic of logic link #1 to the OLT 130 by the band indicated by the MPCP frame transmitted from the OLT 130 before the MPCP frame 1221 (N^{th} time). Further, in the user traffic transmission period 1241, the ONUs 111 to 113 transmit the user traffic of logic link #1 to the OLT 130 by the band indicated by the MPCP frame 1221.

In the example illustrated in FIG. 12, in each of the ONUs 111 to 113, logic link #1 is a logic link which performs the UL data transmission during a longer period than logic link #2. That is, logic link #1 is a logic link having higher latency than that of logic link #2. As one example, logic link #1 is a logic link of the communication service not requiring the low latency, such as the web-browsing or e-mail and logic link #2 is a logic link of the communication service requiring the low latency, such as the call or match-up game.

User traffic transmission periods 1251 to 1254 are transmission periods of the user traffic from the OLT 130 to the ONUs 111 to 113, respectively.

New available bands 1261 and 1262 are, for example, empty bands as the UL MPCP frame of each logic link from the ONUs 111 to 113 is transmitted only to the MPCP frames 1211 and 1213 of each representative link of the ONUs 111 to 113. The new available bands 1261 and 1262 may be used for, for example, UL user traffic transmission of the ONUs 111 to 113.

New available bands 1271 and 1272 are, for example, empty bands as the DL MPCP frame of each logic link to the ONUs 111 to 113 is transmitted only to the MPCP frames 1222 and 1224 of each representative link of the ONUs 111 to 113. The new available bands 1271 and 1272 may be used for, for example, DL user traffic transmission of the ONUs 111 to 113.

As described above, by the ONU 111 according to the embodiment, the control frame (MPCP frame) storing each piece of information indicating the amount of each data of each logic link transmitted to the OLT 130 in the order corresponding to the identification information of each logic link may be transmitted to the OLT 130. As a result, since the UL control frame required for each logic link may be integrated, the available utilization of the band may be promoted. Further, in addition to the ONU 111, the ONUs 112 to 11n may also have the same configuration as the ONU 111.

By the OLT 130 according to the embodiment, the control frame storing each piece of information indicating the amount of each data of each logic link transmitted by the ONU 111 to its own device in the order corresponding to the identification information of each logic link may be received from the ONU 111. As a result, since the UL control frame required for each logic link may be integrated, the available utilization of the band may be promoted. Further, in addition to the ONU 111, even in respect to the ONUs 112 to 11n, the UL control frame may be configured to be integrated similarly to the ONU 111.

By the OLT 130 according to the embodiment, the control frame storing each piece of information indicating the band allocated to each data transmission of each logic link from the ONU 111 in the order corresponding to the identification information of each logic link may be transmitted to the ONU 111. As a result, since the DL control frame required for each logic link may be integrated, the available utilization of the band may be promoted. Further, in addition to the ONU 111, even in respect to the ONUs 112 to 11n, the DL control frame may be configured to be integrated similarly to the ONU 111.

By the ONU 111 according to the embodiment, the control frame storing each piece of information indicating the band allocated to data transmission of each logic link from its own device to the OLT 130 in the order corresponding to the identification information of each logic link may be received from the OLT 130. As a result, since the DL control frame required for each logic link may be integrated, the available utilization of the band may be promoted. Further, in addition to the ONU 111, the ONUs 112 to 11n may also have the same configuration as the ONU 111.

In the aforementioned embodiment, the configuration in which both the UL MPCP frame and the DL MPCP frame are integrated by the representative link has been described, but either the UL MPCP frame or the DL MPCP frame may be integrated by the representative link.

For example, a configuration may be used, in which the UL MPCP frame is integrated by the representative link and the DL MPCP frame is transmitted by each logic link. Even in this case, the available utilization of the UL band may be promoted. Further, a configuration may be used, in which the DL MPCP frame is integrated by the representative link and the UL MPCP frame is transmitted by each logic link. Even in this case, the available utilization of the DL band may be promoted.

As described above, by the optical communication device and the optical communication method, the available utilization of the band may be promoted. For example, among the bands, the number of bands usable for transmitting the user data may be increased.

## Claims

1. An optical communication device as a first optical communication device coupled to a second optical communication device through a plurality of logic links, the optical communication device comprising:
a generator configured to generate a first control frame into which each piece of information for indicating an amount of each data to be transmitted to the second optical communication device is allocated in an order corresponding to each identification information of the plurality of logic links, and
a transmitter configured to transmit the first control frame generated by the generator to the second optical communication device by using the plurality of logic links.

2. The optical communication device according to claim 1,
wherein the transmitter is configured to transmit the first control frame by using any one logic link among the plurality of logic links.

3. The optical communication device according to claim 1,
wherein the transmitter is configured to transmit the first control frame by using a logic link having lowest latency among the plurality of logic links.

4. The optical communication device according to any one of claims 1-3,
wherein the first optical communication device is an optical network unit (ONU) that is an optical communication device at a user side in a passive optical network (PON), and the second optical communication device is an optical line terminal (OLT) that is an optical communication device at a station side in the PON.

5. The optical communication device according to any one of claims 1-4, further comprising:
a receiver configured to receive a second control frame into which each piece of information for indicating each band allocated to each data to be transmitted by using the plurality of logic links to the second optical communication device is allocated in an order corresponding to each identification information of the plurality of logic links,
wherein the transmitter is configured to transmit each data of the plurality of logic links, based on each piece of information for indicating each band of the second control frame received by the receiver.

6. An optical communication device as a second optical communication device coupled to a first optical communication device through a plurality of logic links, the optical communication device comprising:
a receiver configured to receive a first control frame into which each piece of information for indicating an amount of each data to be transmitted from the first optical communication device in an order corresponding to each identification information of the plurality of logic links is allocated, and
an allocator configured to allocate a band to each data transmission by the plurality of logic links from the first optical communication device to the second optical communication device, based on the first control frame.

7. The optical communication device according to claim 6, further comprising:
a generator configured to generate a second control frame into which each piece of information for indicating each band allocated to each data to be transmitted by using the plurality of logic links is allocated in an order corresponding to each identification information of the plurality of logic links; and
a transmitter configured to transmit the second control frame to the first optical communication device.

8. An optical communication method of a passive optical network including a first optical communication device, a second optical communication device, and a plurality of logic links through which the first optical communication device is coupled to the second optical communication device, the optical communication method comprising:
generating a first control frame into which each piece of information for indicating an amount of each data to be transmitted to the second optical communication device is allocated in an order corresponding to each identification information of the plurality of logic links, by the first optical communication device; and
transmitting the first control frame to the second optical communication device by using the plurality of logic links, by the first optical communication device.

9. The optical communication method according to claim 8, further comprising:
receiving a first control frame into which each piece of information for indicating an amount of each data to be transmitted from the first optical communication device in an order corresponding to each identification information of the plurality of logic links is allocated, by the second optical communication device; and
allocating a band to each data transmission by the plurality of logic links from the first optical communication device to the second optical communication device, based on the first control frame, by the second optical communication device.

10. The optical communication method according to claim 9, further comprising:
generating a second control frame into which each piece of information for indicating each band allocated to each data to be transmitted by using the plurality of logic links is allocated in an order corresponding to each identification information of the plurality of logic links, by the second optical communication device; and
transmitting the second control frame to the first optical communication device, by the second optical communication device.
